# EUROPEAN PATENT APPLICATION

(11) **EP 4 717 484 A1**
(43) Date of publication of application: **01.04.2026**
(21) Application number: 25204570.3
(22) Date of filing: 25.09.2025
(51) Int. Cl.: B60J 7/10, B60J 7/20

(54) **CONVERTIBLE MOTOR-VEHICLE WITH RETRACTABLE RIGID ROOF AND METHOD OF RECONFIGURATION OF A MOTOR-VEHICLE WITH RETRACTABLE RIGID ROOF**

(30) Priority: 27.09.2024 IT 202400021518
(71) Applicant: FERRARI S.p.A., 41100 Modena (IT)
(72) Inventor: CALTAGIRONE, Alessandro, 41100 Modena (IT); MORSELLI, Marco, 41100 Modena (IT)
(74) Representative: Studio Torta S.p.A.

(57) **Abstract**

A convertible motor vehicle is described, comprising a passenger compartment, a front and a rear with a load compartment and a retractable hardtop; the vehicle is capable of being selectively switched to a first configuration in which the hardtop is at least partly arranged so as to cover the passenger compartment and a second configuration in which the hardtop is at least partly housed within the load compartment; the hardtop comprises with reference to the normal travel direction of the motor vehicle and in a plan view orthogonal to a third axis transverse to the first and second axes: a first panel arranged so as to cover, at the top, a first portion of the passenger compartment in the first configuration and housed in the load compartment in the second configuration; and a second panel arranged so as to cover, at the top, a second portion of the passenger compartment both in the first configuration and in the second configuration.

## Description

### CROSS-REFERENCE TO RELATED APPLICATIONS

This patent application claims priority from Italian patent application no. 102024000021518 filed on September 27, 2024, the entire disclosure of which is incorporated herein by reference.

### TECHNICAL FIELD

The present invention relates to a convertible motor vehicle with a retractable hardtop and a relative reconfiguration method.

### BACKGROUND

Convertible motor vehicles are known, i.e. essentially comprising:
- a body defining a passenger compartment intended to house a driver and any passengers, a front and a rear located at the front and at the back, respectively, relative to the passenger compartment; and
- a retractable hardtop.

The convertible motor vehicle also has a longitudinal axis parallel to a normal travel direction of the motor vehicle, and a transverse axis horizontal and orthogonal to the longitudinal axis.

The convertible motor vehicle may selectively assume:
- a first cabriolet configuration, in which the hardtop is extended and arranged so as to cover the passenger compartment; and
- a second coupé configuration, in which the passenger compartment is open at the top.

In greater detail, the rear of the motor vehicle defines a load compartment and comprises a hatch which is capable of being selectively switched to an open position in which it allows access to the load compartment and a closed position in which it obstructs access to the load compartment.

The motor vehicle also comprises a kinematic selectively operable from inside the motor vehicle during the travel of the same so as to determine the shift from the first configuration to the second configuration and vice versa.

More precisely, to determine this shift, the actuation of the kinematics cause the switch of the hatch from the closed position to the open position, the folding and subsequent movement of the folded hardtop within the load compartment, and the switch of the hatch from the open position to the closed position.

In order to accommodate the folded retractable hardtop into the load compartment, the motor vehicles of known type have non-negligible encumbrances in the rear parallel to the transverse axis of the motor vehicle.

These encumbrances, on the one hand, determine inevitable constraints that penalize aerodynamic performance.

In fact, these encumbrances inevitably penalise the overall aerodynamic drag coefficient of the motor vehicle, increasing the overall consumption thereof with the same performance.

This penalization is even more severe in the case of performance convertible motor vehicles with electric propulsion. In fact, the still contained levels of electrical energy density stored in the electric batteries of today's conception result in a limited autonomy, which can be increased in part by reducing the overall aerodynamic drag of the motor vehicle.

These encumbrances also limit the designer's freedom in conceiving the overall shape of the motor vehicle and the consequent stylistic appearance.

A need is felt in the sector for a convertible motor vehicle with the lowest possible overall aerodynamic drag.

There is also a felt need for maximum freedom in the design of the rear portion, so as to be able to create the motor vehicle with the desired style.

### SUMMARY

Aim of the present invention is to realise a convertible motor vehicle with a retractable hardtop, which allows to satisfy at least one of the needs mentioned above.

The aforesaid aim is achieved by the present invention, as it relates to a convertible motor vehicle with a hardtop, as defined by claim 1.

The present invention also relates to a method for the reconfiguration of a convertible motor vehicle with a hardtop, as defined by claim 8.

### BRIEF DESCRIPTION OF THE DRAWINGS

For a better understanding of the present invention, a preferred embodiment is described below, by way of nonlimiting example and with reference to the accompanying drawings, wherein:
- Figure 1 is a perspective view of a convertible motor vehicle with a retractable hardtop realized according to the present invention, with parts removed for clarity and in a first coupé configuration;
- Figure 2 is a side view of the motor vehicle of Figure 1, with parts removed for clarity;
- Figures 3 to 6 show respective successive steps in the reconfiguration of the motor vehicle of Figures 1 and 2 from the first coupé configuration to a second cabriolet configuration; and
- Figure 7 is a perspective view of the motor vehicle of Figures 1 to 6, with parts removed for clarity in the second cabriolet configuration.

### DESCRIPTION OF EMBODIMENTS

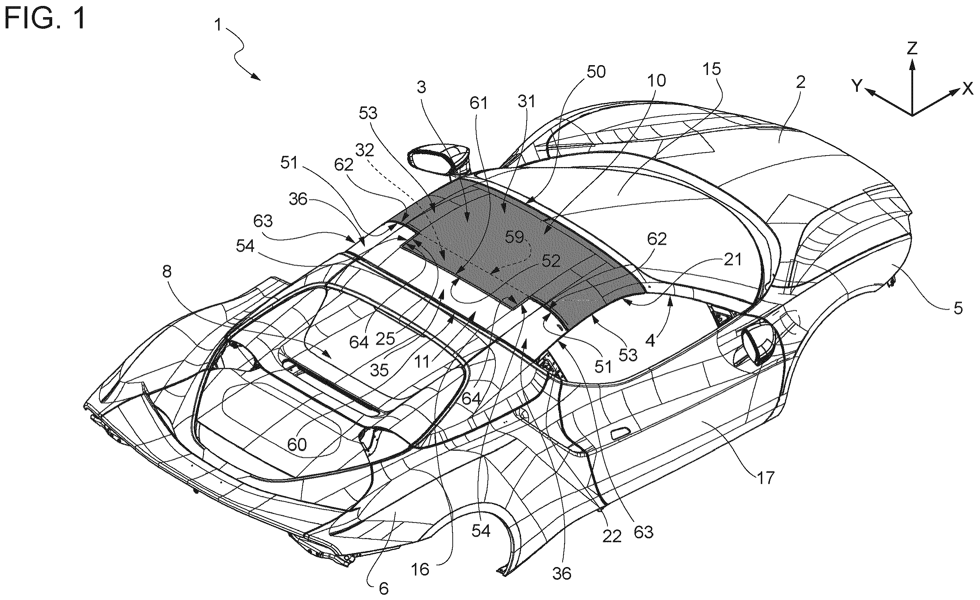

With reference to Figures 1 to 7, 1 denotes a motor vehicle comprising a body 2 and a rigid retractable hardtop 3 commonly known as a "retractable hard-top roof".

It is also possible to define:
- a longitudinal axis X integral with the motor vehicle 1, arranged, in use, horizontal and parallel to a normal travel direction of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

It should be specified that in the remainder of the present description, expressions such as "above", "below", "front", "rear" and the like are used with reference to conditions of normal travel of the motor vehicle 1.

It should also be specified that in the remainder of the present description the expression "main extension" of an edge along an axis is used to indicate that the edge can also be slightly curved but has a length parallel to the aforesaid axis.

The body 2 essentially comprises:
- a passenger compartment 4 intended to be occupied by a driver and any passengers; and
- a front 5 and a rear 6 located at the front and at the back, respectively, of the passenger compartment 3.

In more detail, the body 2 comprises, in turn:
- a windscreen 15 delimiting, at the front, the passenger compartment 4;
- a backrest 16 opposite the windscreen 15 and delimiting, at the back, the passenger compartment 4; and
- a pair of doors 17 movable between a closed position in which they laterally delimit the passenger compartment 4 and extend between the windscreen 15 and the backrest 16, and an open position in which they allow access to/exit from the passenger compartment 4.

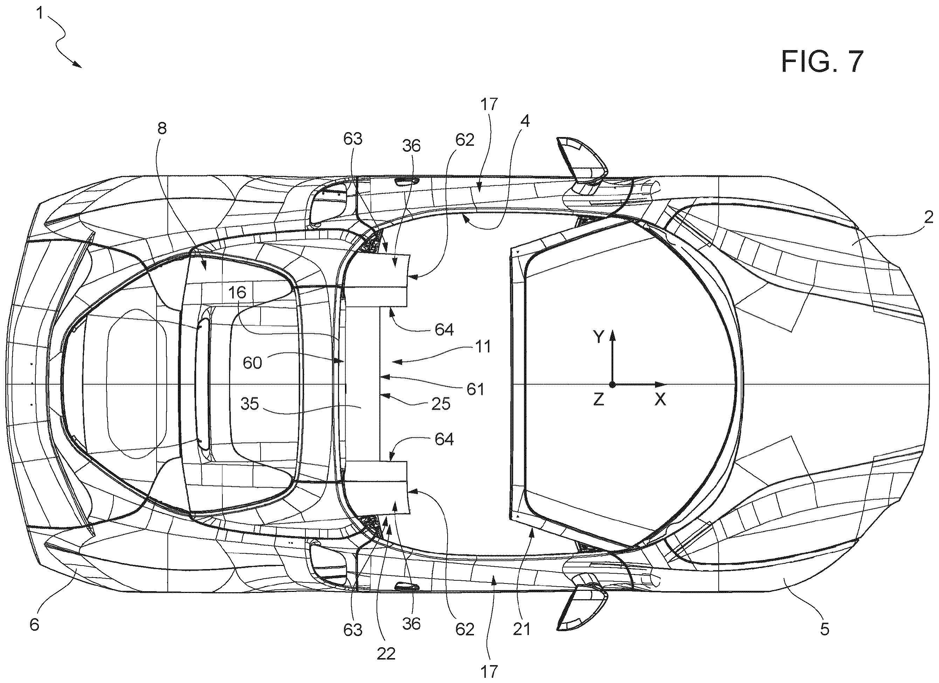

The convertible motor vehicle 1 can selectively assume:
- a coupé configuration (Figure 1), in which the hardtop 3 is arranged so as to cover the passenger compartment 4; and
- a cabriolet configuration (figure 7), in which the passenger compartment 4 is partly open at the top and the hardtop 3 is partly housed within the rear 6.

In more detail, the rear 6 of the motor vehicle 1 defines a load compartment 7, and comprises a hatch 8 which is selectively capable of switching to an open position in which it allows access to the load compartment 7 and a closed position in which it obstructs access to the load compartment 7.

The motor vehicle 1 comprises a kinematic selectively operable from inside the motor vehicle during the travel thereof so as to determine the switch of the hatch 8 from the closed position to the open position, the folding and subsequent movement of the hardtop 3 completely folded into the load compartment 7, and the switch of the hatch 8 from the open position to the closed position.

Such kinematic is not shown as not forming part of the present invention.

Advantageously, the hardtop 3 comprises, with reference to said normal travel direction of the motor vehicle 1:
- a panel 10 arranged so as to cover, at the top, a portion 21 of said passenger compartment 4 in the first configuration of the motor vehicle 1 and housed in the load compartment 7 in the second configuration of the motor vehicle 1; and
- a second panel 11 arranged so as to cover, at the top, a second portion 22 of the passenger compartment 4 both in the first configuration and in the second configuration of the motor vehicle 1.

In the following of the present description, the hardtop 3 is described with reference to a plan view orthogonal to the axis Z.

In more detail, the portion 21 is arranged in front of the portion 22 of the passenger compartment.

Even more precisely, the portion 21 is interposed substantially parallel to the axis Y between the windscreen 15 and the portion 22.

The portion 22 is interposed substantially parallel to the axis Y between the portion 21 and the backrest 16.

The panel 10 comprises, in turn, a portion 31 and a portion 32. The portion 31 is arranged in front of the portion 32.

The portion 32 protrudes from the portion 31 toward the rear 6 symmetrically to the axis X.

More in particular, the portions 31, 32 give the panel 10 a "T" shape.

The panel 11 comprises, in turn, a portion 35 and a pair of portions 36. The portion 35 is interposed parallel to the axis Y between the portions 36.

The portion 31 of the panel 10 is arranged in front of and against the portions 36 of the panel 11.

The portion 35 of the panel 10 is located behind and against the portion 32 of the panel 10.

The portions 36 are opposite one another along the axis Y and arranged laterally and so as to strike against the portion 32 of the panel 10 and laterally to the portion 35 of the panel 11, proceeding from the rear 6 towards the front 5 parallel to the axis X.

More in particular, the portions 36 protrude from the portion 35 towards the rear 6.

The portions 36 are fixed to respective pillars delimiting the body 2 at the back. Such pillars are commonly known in the automotive industry as "B-pillars".

The panel 11 defines a cavity 25 delimited laterally by the portions 36 of the panel 11 at the back by the portion 35 of the panel 11, and open on the opposite side of the portion 35 and towards the front 5.

The cavity 25 is engaged by the portion 32 of the panel 10.

In the case shown, the portions 31, 32, 35, 36 are rectangular.

The panel 10 comprises, more precisely:
- a front end edge 50 delimiting, at the front, the portion 31 and extending parallel to axis Y;
- a pair of rear end edges 51 opposite the edge 50 parallel to the axis X and opposite one another parallel to the axis Y, extending parallel to the axis Y, and delimiting the portion 31 at the back; and
- a rear end edge 52 opposite the edge parallel to the axis X, extending parallel to the axis Y, and delimiting the portion 32 at the back.

In particular, the edge 52 is offset relative to the edges 51 with reference to the axis X and is arranged closer to the rear 6 with respect to the edges 51.

The edge 52 is also arranged in an interposed position between the edges 51 with reference to the axis Y.

The panel 10 also comprises:
- a pair of edges 53 opposite one another with respect to the axis Y, each extending between respective ends of the edges 50, 51 and laterally delimiting the portion 31; and
- a pair of edges 54 opposite one another with respect to the axis Y, each extending between respective ends of the edges 51, 52 and laterally delimiting the portion 32.

The portion 31 is also delimited at the back as well as by the edges 52 by an ideal edge 59 (indicated in dashed outline in Figure 1) joining the edges 51 and defined by the extension of the edges 51 themselves.

This ideal edge 59 also delimits the portion 32 at the front.

The panel 11 comprises, in turn:
- a rear end edge 60, elongated parallel to the axis Y and delimiting, at the back, the portions 35, 36; and
- a front end edge 61, elongated parallel to the axis Y, opposite the edge 60 along the axis X and delimiting the portion 35; and
- a pair of front end edges 62, elongated parallel to the axis Y, opposite the edge 60 along the axis X and delimiting respective portions 36.

The edges 62 are offset relative to the edge 61 parallel to the axis X.

In particular, the edges 62 are closer to the front 5 of the edge 61.

The edge 61 is arranged interposed between the edges 62 along the axis X.

The panel 10 also comprises:
- a pair of edges 63 opposite one another with respect to the axis Y, each extending parallel to the axis X between a respective end of the edge 60 and a respective first end of a corresponding edge 62, laterally delimiting respective portions 36; and
- a pair of edges 64 opposite one another with respect to the axis Y, each extending parallel to the axis X between a respective end of the edge 61 and a respective second end opposite the corresponding first end of a corresponding edge 62.

In particular, the edges 52, 61 of the panels 10, 11 have a first length parallel to the axis Y and the edges 51, 62 have a second length parallel to the axis Y greater than the first length.

The edges 53 of the panel 10 have a third length parallel to the axis X and the edges 63 of the panel 11 have a fourth length parallel to the axis X, which is smaller than the third length.

In the case shown, the portions 36 converge towards the portion 35, proceeding from the respective edge 63 towards the edge 64.

The edges 53 of the panel 10 are arranged below the edges 54 of the panel 10 itself.

The edges 63 of the panel 11 are arranged below the edges 64 of the panel 11 itself.

The edge 60 of the panel 11 is arranged below the edges 62, 51 of the panels 11, 10.

The edge 50 of the panel 10 is arranged below the edges 62, 51 of the panels 11, 10.

With reference to the coupé configuration of the motor vehicle 1, the rear edge 52 of the panel 10 strikes against the front edge 61 of the panel 11, the rear edges 51 of the panel 10 are arranged so as to strike against respective front edges 62 of the panel 11.

The edges 54 of the panel 10 are arranged so as to strike against respective edges 64 of the panel 11.

The edges 63 of the panel 11 are arranged so as to strike against and contiguous with respective edges 53 of the panel 10.

The edges 50, 51, 52; 60, 61, 62 of the panels 10; 11 extend parallel to the axis X.

The edges 53, 54; 63, 64 of the panels 10; 11 extend parallel to the axis X.

The panels 10, 11 extend symmetrically to the axis X.

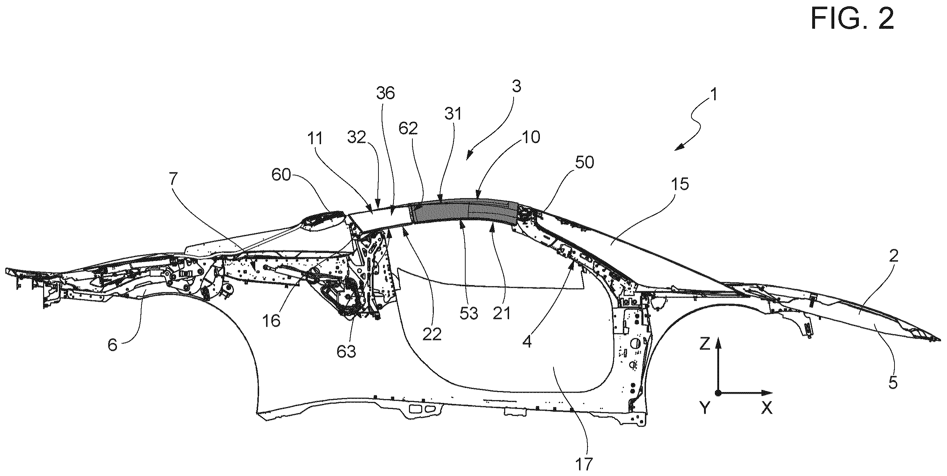

The reconfiguration of the motor vehicle 1 is shown hereinbelow starting from the condition shown in Figures 1 and 2, in which the motor vehicle 1 is in the cabriolet configuration and the hardtop 3 is in the completely extended configuration in which it completely covers the passenger compartment 4.

The reconfiguration of the hardtop 3 is shown below starting from the condition shown in Figures 1 to 3, in which the motor vehicle 1 is in the cabriolet configuration and the hardtop 3 is arranged so as to completely cover the passenger compartment 4.

In this "cabriolet" configuration of the motor vehicle 1, the panels 10, 11 are arranged at the top of the portions 21, 22 of the passenger compartment 4, respectively.

In greater detail, the panel 10 is interposed along the axis X between the windscreen 15 and the panel 11, and the panel 11 is interposed between the panel 10 and the backrest 16 along the axis X itself.

The portion 31 of the panel 10 is interposed along the axis X between the windscreen 15 and the portions 36 of the panel 11.

The portion 32 of the panel 10 is interposed along the axis X between the portion 31 of the panel 10 and the portion 35 of the panel 11.

The rear edge 52 of the panel 10 strikes against the front edge 61 of the panel 11, the rear edges 51 of the panel 10 are arranged so as to strike against respective front edges 62 of the panel 11.

The edges 63 of the panel 11 are arranged so as to strike against and contiguous with respective edges 53 of the panel 10.

The edges 64 of the panel 11 are arranged so as to strike respective edges 54 of the panel 10.

Even more precisely, the hardtop 3 is delimited:
- at the front by the edge 50 of the panel 10 striking against an upper edge of the windscreen 15;
- at the back by the edge 61 of the panel 11 striking against the upper edge of the backrest 16; and
- laterally by the edges 53, 63 of the panels 10, 11 striking against upper edges of respective doors 17 arranged in the closed position.

The hatch 8 is arranged so as to cover the load compartment 7, as shown in Figures 1 and 2.

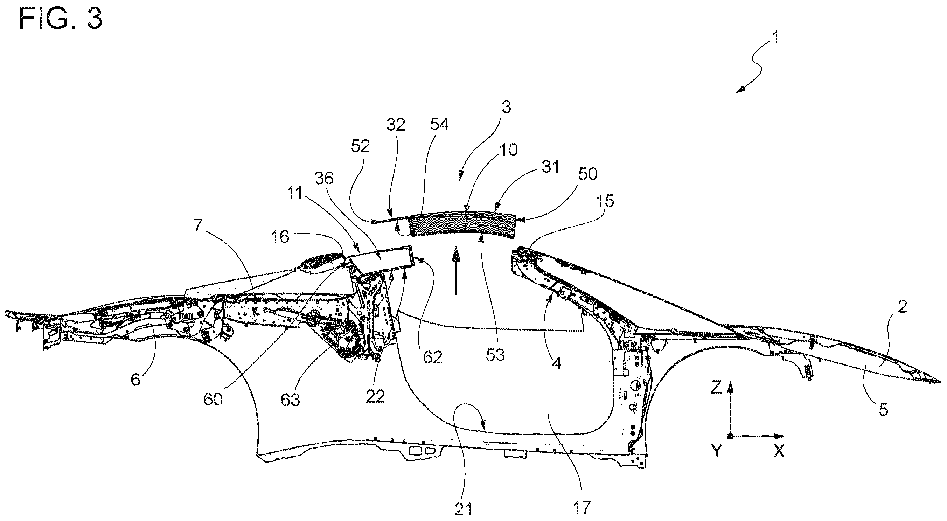

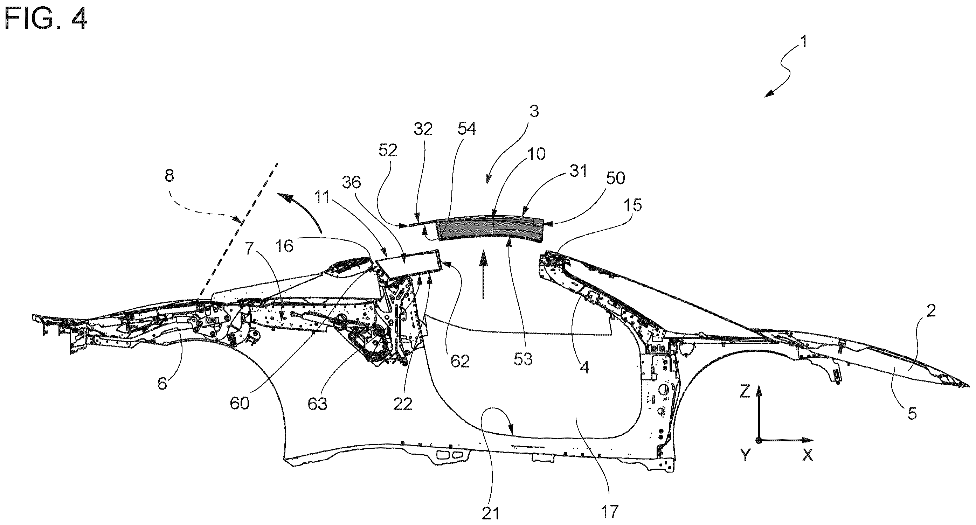

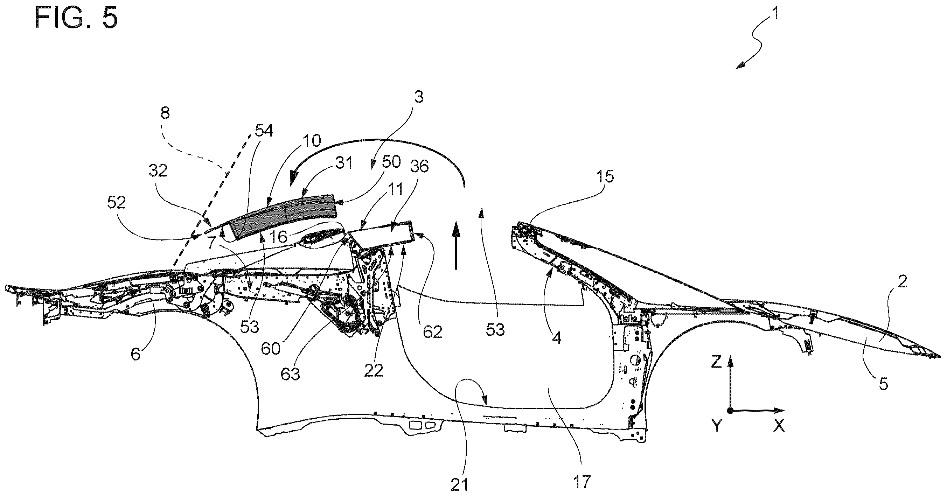

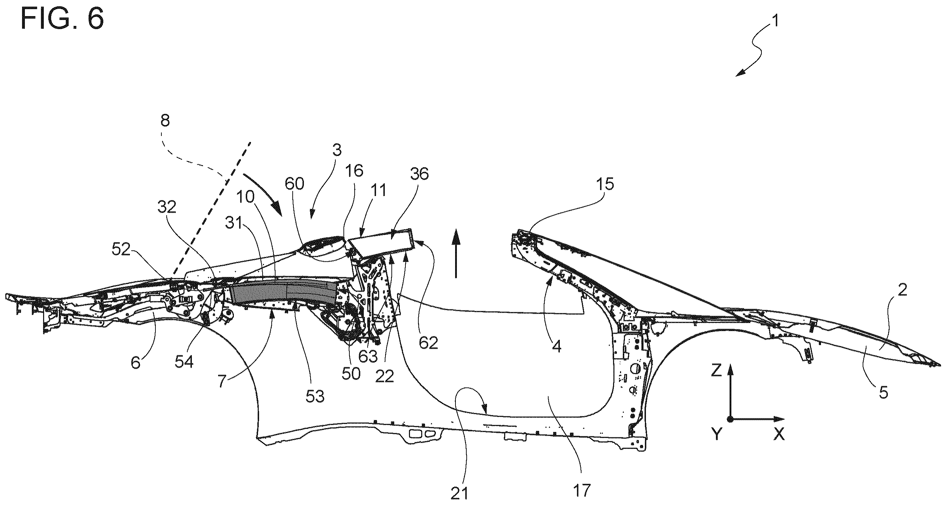

Following the actuation of a control from inside the motor vehicle 1, the kinematic:
- lifts the panel 11 from the panel 10 parallel to the axis Z (Figure 3);
- arranges the hatch 8 in the lifted position so as to open the load compartment 7 at the top (Figure 4);
- roto-translates the panel 10 towards the front 5 and around the axis X (Figure 5) until it is arranged inside the open load compartment 7 (Figure 6); and
- returns the hatch 8 into the lowered position in which it closes the load compartment 7 at the top inside which the panel 10 is housed (Figure 7).

In particular, the panel 11 is arranged inside the load compartment with the edges 50, 52 arranged at the top of the edges 53.

During this movement, the panel 11 remains stationary with respect to the body 2 and in the same position assumed in the first "coupé" configuration of the motor vehicle 1.

The shift of the motor vehicle 1 from the cabriolet configuration of Figure 8 to the coupé configuration of Figure 1 takes place by carrying out the aforesaid operations in a chronologically opposite sequence. In a nutshell, the hatch 8 is brought into the open position, the panel 11 is roto-translated towards the front 5 and around the axis X.

Next, the panel 11 is lowered toward the panel 10 until the rear edge 52 of the panel 10 is returned so as to strike against the front edge 61 of the panel 11, the rear edges 51 of the panel 10 so as to strike against respective front edges 62 of the panel 11, and the edges 63 of the panel 11 so as to strike against and contiguous respective edges 53, of the panel 10.

From an examination of the motor vehicle 1 and of the method for the reconfiguration of the motor vehicle 1 according to the invention, the advantages that it allows to be obtained are evident.

In particular, with reference to the said normal travel direction of the motor vehicle 1 and in the plan view:
- the panel 10 is arranged so as to cover, at the top, the portion 21 in the coupé configuration and housed in the load compartment 7 in the cabriolet configuration of the motor vehicle 1; and
- the panel 11 is arranged so as to cover, at the top, the portion 22 of the passenger compartment 4 both in the "cabriolet" configuration and in the "coupé" configuration of the motor vehicle 1.

Thanks to the fact that the panel 10 alone is housed in the load compartment 8 in the "coupé" configuration of the motor vehicle 1, it is possible to contain the encumbrance parallel to the axis Y of the load compartment 8 and, consequently, also the minimum encumbrance parallel to the axis Y of the rear 6 of the corresponding motor vehicle 1.

This effect is particularly exacerbated by the fact that the portions 31, 32 give the panel 10 a "T" shape.

It is thus possible to reduce the overall aerodynamic drag of the motor vehicle 1 and at the same time reduce the constraints to be respected in the conception of the shape and style of the motor vehicle 1.

Finally, it is clear that modifications and variations may be made to motor vehicle 1 and to the method for the reconfiguration of the motor vehicle 1 realized according to the present invention, which, however, do not go beyond the scope of protection defined by the claims.

## Claims

1. A convertible motor vehicle (1) comprising:
- a body (2);
- a passenger compartment (4);
- a front and a rear (5, 6) located at the front and at the back, respectively, of said passenger compartment (4), with reference to a normal travel direction of said motor vehicle (1); said rear (6) comprising a load compartment (7); and
- a retractable hardtop (3);
said motor vehicle (1) further having:
- a first axis (X), which is oriented from said rear (6) to said front (6) and is parallel to a normal travel direction of said motor vehicle (1); and
- a second axis (Y) arranged, in use, horizontal and orthogonal to said first axis (X);
said motor vehicle (1) being capable of being selectively switched to:
- a first configuration, in which said hardtop (3) is at least partly arranged so as to cover said passenger compartment (4);
- a second configuration, in which said hardtop (3) is at least partly housed within said load compartment (7) of said rear (6) and said passenger compartment (4) is partly open;
**characterized in that** said hardtop (3) comprises, with reference to said normal travel direction of said motor vehicle (1) and in a plan view orthogonal to a third axis (Z) transverse to said first and second axes (X, Y):
- a first panel (10) arranged so as to cover, at the top, a first portion (21) of said passenger compartment (4) in said first configuration of said motor vehicle (1) and housed in said load compartment (7) in said second configuration of said motor vehicle (1); and
- a second panel (11) arranged so as to cover, at the top, a second portion (22) of said passenger compartment (4) both in said first configuration and in said second configuration of said motor vehicle (1).

2. The motor vehicle according to claim 1, **characterized in that** said first panel (10) comprises a third portion (31) and a fourth portion (32), and **in that** said second panel (11) comprises a fifth portion (35) and a pair of sixth portions (36);
said motor vehicle (1) being further **characterized in that**, with reference to said first configuration of the motor vehicle (1):
said third portion (31) of said first panel (10) is located in front of said fourth portion (32) of said first panel (10);
said fifth portion (35) of said second panel (11) is located behind and against said fourth portion (32) of said first panel (10);
the sixth portions (36) of said second panel (11) are located laterally to said fifth portion (35) of said second panel (11) and laterally to and against said fourth portion (32) of said first panel (10).

3. The motor vehicle according to claim 2, **characterized in that** said fourth portion (32) protrudes from said third portion (31) towards said rear (6), and **in that** said second panel (11) defines a cavity (25) engaged by said fourth portion (32) of said first panel (10);
said cavity (25) being delimited at the back by said fifth portion (35) of said second panel (11) and laterally by said sixth portions (36) of said second panel (11) and being open on the side opposite said fifth portion (35).

4. The motor vehicle according to claim 2 or 3, **characterized in that** said first panel (10) comprises, in turn:
- a first front end edge (50) delimiting said third portion (31);
- a pair of second rear end edges (51) delimiting said first portion (31) and a third rear end edge (52) delimiting said second portion (32); said third edge (52) being offset relative to said second edges (51) parallel to said first axis (X);
said second panel (11) comprising, in turn:
- a fourth rear end edge (60) delimiting said fifth portion (35) and said sixth portions (36);
- a fifth front end edge (61), opposite said fourth edge (60) and delimiting said fifth portion (35); and
- a pair of sixth front end edges (62), opposite said fourth edge (60) and offset relative to said fifth edge (61) parallel to said first axis (X) and delimiting respective sixth portions (36);
said third edge (52) of said first panel (10) striking against said fifth edge (61) of said second panel (11);
said second edges (51) of said first panel (10) striking against respective sixth edges (62) of said second panel (11).

5. The motor vehicle according to claim 4, **characterized in that** said first panel (10) further comprises:
- a pair of seventh edges (53) opposite one another, extending between said first edge (50) and respective second edges (51) parallel to said first axis (X) and laterally delimiting said third portion (31) of said first panel (10); and
- a pair of eighth edges (54) opposite one another, offset relative to said seventh edges (53) with reference to said second axis (Y), extending between respective second edges (51) and said third edge (52) parallel to said first axis (X) and laterally delimiting said fourth portion (32) of said first panel (10);
said second panel (11) further comprising:
- a pair of ninth edges (63) opposite one another, extending between said fourth edge (60) and said sixth edges (62) parallel to said first axis (X), laterally delimiting respective sixth portions (36) and arranged so as to strike against and be contiguous with respective seventh edges (53) of said third portion (35) of said first panel (10); and
- a pair of tenth edges (64) opposite one another, extending between said fifth edge (61) and respective sixth edges (62) parallel to said first axis (X), laterally delimiting respective sixth portions (36) on the side opposite respective ninth edges (63) with respect to said second axis (Y) and striking against respective eighth edges (54) of said first panel (10).

6. The motor vehicle according to claim 5, **characterized in that**:
- said third edge (51) of said first panel (10) has a first extension parallel to said second axis (Y) and each second edge (52) of said first panel (10) has a second extension parallel to said second axis (Y), which is smaller than said first length; and
- said fifth edge (61) of said second panel (11) has said first extension parallel to said second axis (Y) and each sixth edge (62) of said second panel (11) has said second extension parallel to said second axis (Y).

7. The motor vehicle according to any one of the preceding claims, **characterized in that** said first panel (10) can be moved by said second panel (11) from said first configuration to said second configuration according to a trajectory comprising, in turn:
- a first translation stroke parallel to said third axis (Z) and along which said first panel (10) is, in use, lifted by said second panel (11);
- a second rotation-translation stroke around said second axis (Y) and along which said second panel (11) is, in use, moved towards said rear (6) of said motor vehicle (1); and
- a third translation stroke parallel to said third axis (Z) and along which said first panel (10) is, in use, placed inside said load compartment (7).

8. A method for the reconfiguration of a motor vehicle (1); said motor vehicle (1) comprising:
- a body (2);
- a passenger compartment (4);
- a front and a rear (5, 6) located at the front and at the back, respectively, relative to said passenger compartment (4);
said motor vehicle (1) further having:
- a first axis (X), which is oriented from said rear (6) to said front (5) and is parallel to a normal travel direction of said motor vehicle (1); and
- a second axis (Y) arranged, in use, horizontal and orthogonal to said first axis (X);
said method comprising the steps of:
i) switching said motor vehicle (1) between a first configuration, in which said hardtop (3) is at least partly arranged so as to cover said passenger compartment (4), and a second configuration, in which said hardtop (3) is at least partly housed inside said rear (6) and said passenger compartment (4) is at least partly open;
**characterized in that** it comprises the steps of:
ii) placing, with reference to said normal travel direction of said motor vehicle (1) and in a plan view orthogonal to a third axis (Z) transverse to said first and second axes (X, Y), a first panel (10) and a second panel (11) of said hardtop (3) so as to cover a first portion (21) and a second portion (22), respectively, of said passenger compartment (4); and
iii) housing said first panel (10) inside said load compartment (7) and leaving said second panel (11) to cover said second portion (22) of said passenger compartment (4).

9. The method according to claim 8, **characterized in that** it comprises the steps of placing, with reference to said first configuration of said motor vehicle (1):
iv) a third portion (31) and a fourth portion (32) of said first panel (10) in front of and against fifth portions (36) and a sixth portion (35) of said second panel (11), respectively; said third portion (31) being located in front of said second portion (32) and said fifth portions (36) being located laterally to said sixth portion (35); and
v) said fifth portions (36) of said second panel (11) laterally against said fourth portion (32) of said second panel (11).

10. The method according to claim 9, **characterized in that** it comprises the step vi) of housing said fourth portion (32) of said first panel (10) inside a cavity (25) of said second panel (11);
said cavity (25) being delimited at the back by said sixth portion (35) of said second panel (11) and laterally by said fifth portions (36) of said second panel (11) and being open on the side opposite said fifth portion (35).

11. The method according to claim 9 or 10, **characterized in that** it comprises the steps of:
vii) placing a first rear end edge (52) of said first panel (10) against a second front end edge (61) of said sixth portion (35) of said second panel (11); and
viii) placing third rear end edges (51) delimiting said third portion (31) of said first panel (10) against respective fourth front end edges (62) of corresponding fifth portions (36) of respective second panels (11);
said fourth edges (62) being offset relative to said second edge (61) parallel to said first axis (X) and being opposite a fifth rear end edge (60) of said second panel (11) with reference to said first axis (X); said fifth end edge (60) delimiting said fifth portions (35) and said sixth portion (36) of said second panel (11).

12. The method according to claim 11, **characterized in that** it comprises the steps of:
ix) placing sixth side end edges (63) of said fifth portions (36) of said second panel (11) so that they strike against and are contiguous with respective seventh side end edges (53) of said third portion (31) of said first panel (10); and
x) placing eighth edges (64) laterally delimiting respective fifth portions (35) of said second panel (11) against respective ninth edges (54) laterally delimiting said fourth portion (32) of said first panel (10);
said sixth edges (63) extending between said fifth edge (60) and respective fourth edges (62) parallel to said first axis (X);
said eighth edges (64) extending between said second edge (61) and respective fourth edges (62) parallel to said first axis (X).

13. The method as claimed in any one of the claims from 8 to 12, **characterised in that** it comprises the step of:
xi) moving said second panel (11) from said first configuration to said second configuration of said motor vehicle (1) according to a trajectory comprising, in turn:
- a first translation stroke parallel to said third axis (Z) and along which said first panel (10) is lifted by said second panel (11);
- a second rotation-translation stroke around said second axis (Y) and along which said second panel (11) is moved towards said rear (6) of said motor vehicle (1); and
- a third translation stroke parallel to said third axis (Z) and along which said first panel (10) is placed inside said load compartment (7).
